# EUROPÄISCHE PATENTSCHRIFT

(11) **EP 3 741 502 B1**
(45) Veröffentlichungstag und Bekanntmachung des Hinweises auf die Patenterteilung: **06.10.2021**
(21) Anmeldenummer: 19175365.6
(22) Anmeldetag: 20.05.2019
(51) Int. Cl.: B23Q 1/00

(54) **NULLPUNKT-SPANNVORRICHTUNG**
ZERO POINT CLAMPING DEVICE
DISPOSITIF DE SERRAGE À POINT ZÉRO

(43) Veröffentlichungstag der Anmeldung: 25.11.2020
(73) Patentinhaber: SMW-AUTOBLOK Spannsysteme GmbH, 88074 Meckenbeuren (DE)
(72) Erfinder: DANNECKER, Patrick, 74243 Hardthausen (DE); MARQUART, Jürgen, 88677 Markdorf (DE); MAURER, Eckhard, 88094 Oberteuringen (DE)
(74) Vertreter: Engelhardt, Volker

(56) Entgegenhaltungen:
- EP-A1- 3 360 633
- WO-A1-03/039807
- DE-B3-102017 114 150

## Beschreibung

Die Erfindung bezieht sich auf eine Nullpunkt-Spannvorrichtung nach dem Oberbegriff des Patentanspruches 1 (siehe z.B. DE 10 2017 114150 B3), durch die ein Gegenstand zentriert und wiederholungsgenau im Raum fixiert ist.

Solche Spannvorrichtungen werden an Werkzeugmaschinen zur Abstützung von zu bearbeitenden Gegenständen, insbesondere von rotationssymmetrischen Werkstücken, benötigt, denn diese Werkstücke sind in Serie zu bearbeiten und demnach ohne Zeitverlust auszuwechseln. Dabei soll die vorgegebene Bearbeitungsposition des Werkstückes bezogen auf eine Bezugsgröße, die als sog. Nullpunkt definiert ist, beibehalten sein, um zu vermeiden, dass eine erneute Ausmessung der Werkstückposition erforderlich ist. Demnach wird der Nullpunkt bezogen auf die Werkzeugmaschine oder deren Werkzeugtisch festgelegt und zu diesem die räumliche Position des eingespannten Werkstückes ermittelt. Der Nullpunkt dient demnach als Bezugsgröße für die Bearbeitungsposition des Werkstückes. Beim Austauschen der Werkstücke soll folglich ein identischer Abstand zu der vorgegebenen Bezugsgröße (Nullpunkt) vorhanden sein.

Eine derartige Nullpunkt-Spannvorrichtung ist beispielsweise der EP 1 886 751 B1 zu entnehmen. Die Spannvorrichtung besteht aus einem Gehäuse, in das eine Aufnahmeöffnung eingearbeitet ist. In die Aufnahmeöffnung kann ein Haltebolzen eingesetzt sein, der über seitlich in dem Gehäuse angeordnete Spannschieber festgesetzt ist. Die Spannschieber sind dabei senkrecht zu der Zentrierachse des Haltebolzens angeordnet und bewegen sich somit in radialer Richtung in das Innere der Aufnahmeöffnung und nach außen, um diese freizugeben. Die Spannschieber gelangen in einen reifschlüssigen Wirkkontakt mit dem Haltebolzen, durch den dieses im Spannzustand festgesetzt ist.

Die Spannschieber werden synchron mittels eines axial betätigbaren Stellkolbens betätigt. Zwischen der Stirnseite des Stellkolbens, der als Ring oder Zylinder ausgestaltet ist, und den jeweiligen Spannschiebern ist eine geneigte Fläche oder schiefe Ebene vorgesehen, so dass über die Geometrie der schrägen Fläche bzw. schiefe Ebene die axiale Zustellbewegung des Stellkolben in eine radiale Zustellbewegung für die Spannschieber umgewandelt ist.

Nachteiligerweise hat sich für solche Spannvorrichtungen herausgestellt, dass diese eine sehr hohe Baumessung benötigen, denn die axialen Zustellbewegungen des Stellkolben sind in dem Gehäuse abzustützen. Zudem ist der Zustellweg der Spannschieber äußerst gering, denn durch die schrägen Flächen zwischen dem Stellkolben und den jeweiligen Spannschieber ist diese Bewegungsmöglichkeit begrenzt. Gleichzeitig führt die kraftschlüssige Wirkverbindung zwischen dem Stellkolben und den Spannschiebern dazu, dass der Außendurchmesser des Gehäuses erheblich zu vergrößern ist, um überhaupt eine entsprechende radiale Bewegungsmöglichkeit für die Spannschieber zur Verfügung zu stellen. Folglich baut das Gehäuse der bekannten Spannvorrichtung sowohl in seiner Höhe als auch in seinem Außenumfang entsprechend groß sind. Oftmals sind jedoch die vorhandenen Räume oder Platzverhältnisse an Werkzeugmaschinen begrenzt, so dass solche Nullpunkt-Spannvorrichtungen überhaupt nicht eingesetzt werden können.

Es ist daher Aufgabe der Erfindung eine Nullpunkt-Spannvorrichtung der eingangsgenannten Gattung derart weiterzubilden, dass durch diese zum einen eine zuverlässige dauerhafte sowie wiederholungsgenau Fixierung einer Vielzahl von Werkstücken, Werkzeugen, Paletten oder sonstigen Gegenständen ermöglicht ist und dass zum anderen des Gehäuses der Spannvorrichtung äußerst kompakt baut, dass also dessen Außenabmessung in Höhe und Durchmesser äußerst gering gestaltet werden kann.

Zudem sollen mehrere der derart ausgestalteten Spannvorrichtungen trieblich miteinander in verschiedenen Ebenen kombinierbar sein, um zu gewährleisten bzw. zu erreichen, dass für mehrere solcher Spannvorrichtungen ausschließlich ein manueller, elektrischer, pneumatischer oder hydraulischer Antrieb benötigt ist.

Diese Aufgabe ist durch die Merkmale des kennzeichnenden Teils von Patentanspruch 1 gelöst.

Weitere vorteilhafte Weiterbildungen der Erfindung ergeben sich aus den Unteransprüchen.

Dadurch, dass in dem Gehäuse ein Betätigungselement verdrehbar gelagert ist, dessen Rotationsachse parallel zu den Spannschiebern verläuft, dass in jeden Spannschieber eine Durchgangsöffnung eingearbeitet ist, die senkrecht zu der Längssachse der Spannschieber ausgerichtet ist, dass in jede Durchgangsöffnung ein Schwenkzapfen eingesetzt ist, dessen eines freies Ende in einer in dem Betätigungselement eingearbeiteten Führungsnut eingreift und mit dieser trieblich verbunden ist und dessen gegenüberliegendes zweites freies Ende in einem dem Gehäuse zugeordneten Widerlager eingesetzt ist und in diesem kippbar gehalten ist, ist eine äußerst kompakte Bauhöhe geschaffen, denn sämtliche mechanischen Bauteile, die zur Bewegung der Spannschieber erforderlich sind, liegen in einer gemeinsamen Ebene.

Das Betätigungselement ist zudem von außen zugänglich, so dass dieses entweder manuell mittels eines Schraubendrehers oder Vierkantschlüssels oder trieblich mit einem Elektromotor betätigt werden kann, um dieses in die entsprechende Drehung im oder entgegengesetzt zu dem Uhrzeigersinn zu betätigen. Aufgrund der Verdrehung des Betätigungselementes entsteht eine Verschiebung der mit diesem trieblich verbundenen Schwenkzapfen, denn die in dem Betätigungselement eingearbeitete Führungsnut verläuft spiralförmig, ist also gegenüber der Rotationsachse des Betätigungselementes geneigt. Somit bewegen sich die Schwenkzapfen nach außen oder innen bzw. kreisförmig zu der Rotationsachse des Betätigungselementes, wodurch eine radiale Zustellbewegung auf die Spannschieber einwirkt, wenn das Betätigungselement beispielsweise im Uhrzeigersinn gedreht wird und eine radial nach außen gerichtete Zustellungsbewegung erzeugt ist, wenn das Betätigungselementes entgegengesetzt zu dem Uhrzeigersinn gedreht ist.

Die Schwenkzapfen sind zur Lagerung an dem Gehäuse in einem Widerlager eingesetzt und weisen eine kugelkopfförmige Außenkontur auf, die in eine Pfanne mit einer daran angepassten Innenkontur eingesetzt ist. Folglich schwenken die Schwenkzapfen um die derart gebildete Lagerung zwischen der Auflage des Kugelkopfes und der pfannenartigen Anlagefläche des Widerlagers, sobald das Betätigungselement verdreht ist. Demnach entsteht eine synchrone radiale Zustellbewegung der Spannschieber, da die Neigung und Ausbildung der jeweiligen Führungsnuten in dem Betätigungselement identisch ausgestaltet ist.

Mehrere der vorhandenen Betätigungselemente eines der erfindungsgemäßen Spannvorrichtungen können zudem trieblich miteinander gekoppelt sein, so dass lediglich ein manueller, elektrischer, pneumatischer oder hydraulischer Antrieb für die Verdrehung der jeweiligen Betätigungselemente erforderlich ist. Solche Spannvorrichtungen können vorteilhafter Weise in unterschiedlichen Ebenen angeordnet sein, so dass ein Gegenstand in mehreren räumlich voneinander getrennten Positionen fixierbar ist.

In der Zeichnung ist eine erfindungsgemäße Nullpunkt-Spannvorrichtung dargestellt, das nachfolgend näher erläutert ist. Im Einzelnen zeigt:
- Figur 1: eine Nullpunkt-Spannvorrichtung mit einem Gehäuse, in dem eine Aufnahmeöffnung vorgesehen ist, mit zwei zueinander gegenüberliegenden Spannschiebern, durch die eine in die Aufnahmeöffnung einsetzbare Spannhülse zentriert fixiert ist, mit einem drehbar in dem Gehäuse gelagerten Betätigungselement und mit zwei trieblich mit dem Betätigungselement und den Spannschiebern zusammenwirkenden Schwenkzapfen, die jeweils in einem dem Gehäuse zugeordneten Widerlager kippbar gelagert sind, in Explosionsdarstellung,
- Figur 2: die Spannvorrichtung gemäß Figur 1 entlang der Schnittlinie II - II, mit einem an dem Gehäuse zentriert gehaltenen Gegenstand, der über einen Gewindestift in Form eines Trägerteils an der Spannhülse befestigt ist,
- Figur 3a: eine Draufsicht auf die Spannvorrichtung gemäß Figur 1, im geöffneten Zustand der Spannschieber,
- Figur 3b: die Spannvorrichtung gemäß Figur 3a, im Spannzustand,
- Figur 4a: ein vergrößerter Ausschnitt der Spannvorrichtung gemäß Figur 3b und der Wirkverbindung zwischen den Spannschiebern, den Schwenkzapfen und dem Betätigungselement,
- Figur 4b: ein vergrößerter Ausschnitt zweier in dem Betätigungselement eingearbeiteten Führungsnuten zur Aufnahme der freien Enden der beiden Schwenkzapfen,
- Figur 5: ein vergrößerter Ausschnitt eines der Schwenkzapfen, der im Eingriff mit einem der Spannschieber und dem Betätigungselement sowie dem Widerlager steht, im Schnitt,
- Figur 6: die sechs der Spannvorrichtungen gemäß Figur 1, die paarweise trieblich miteinander verbunden sind, in perspektivischer Ansicht,
- Figur 7: eine vergrößerte Darstellung der trieblichen Wirkverbindung zwischen einem Elektromotor und der Spannvorrichtung gemäß Figur 1 und
- Figur 8: die Spannvorrichtung gemäß Figur 1, in deren Gehäuse ein Elektromotor angeordnet ist, der trieblich mit dem Betätigungselement gekoppelt ist.

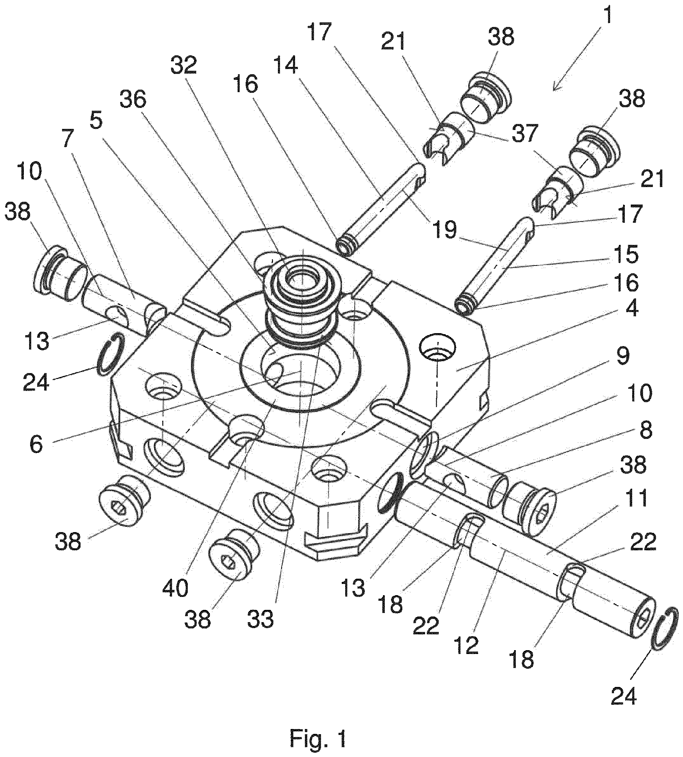

Aus Figur 1 kann die Anordnung von Bauteilen einer Nullpunkt-Spannvorrichtung 1 entnommen werden, durch die ein Gegenstand 2 zentriert und wiederholungsgenau an dieser fixiert werden kann. Der Gegenstand 2 ist dabei als Werkzeug, als ein zu bearbeitendes Werkstück oder als flächiges Bauteil anzusehen. Durch die Spannvorrichtung 1 können jedoch auch eine Vielzahl von zueinander beabstandeten Paletten oder sonstige Baukörper, Traggestell oder dergleichen abgestützt sein.

Jeder einzuspannende Gegenstand 2 ist im eingespannten Zustand des Gegenstandes 2 zu einer Zentrierachse 6 auszurichten, die den Mittelpunkt einer runden in einem Gehäuse 4 eingeeingrachten Aufnahmeöffnung 5 bildet. In die Aufnahmeöffnung 5 kann entweder der Gegenstand 2 unmittelbar oder es kann ein Trägerteil in Form einer Spannhülse 32 eingesetzt sein und die eine Symmetrieachse 3 aufweist. Bei Verwendung einer rotationssymmetrischen Spannhülse 32 wird der Gegenstand 2 an dieser vormontiert und die Symmetrieachse 3 verläuft koaxial zu der Zentrierachse 6, sobald der Spannzustand erreicht ist.

Die Spannvorrichtung 1 besteht aus einem Gehäuse 4, in dessen Zentrum die Aufnahmeöffnung 5 eingearbeitet ist. Zur Fixierung der Spannhülse 32 sind zwei zueinander gegenüberliegende Spannschieber 7, 8 vorgesehen, die axial verschiebbar in dem Gehäuse 4 in einer Bohrung 9 gelagert sind. Im Spannzustand wirken die Spannschieber 7, 8 auf die Spannhülse 32 ein und fixieren diese. Somit sind die Spannschieber 7, 8 in der in dem Gehäuse 4 eingearbeiteten Bohrung 9 eingesetzt und die Längsachsen 10 der Spannschieber 7, 8 bzw. der Bohrung 9 verlaufen koaxial zueinander. Die Zentrierachse 6 der Aufnahmeöffnung 5 und die Längsachse10 stehen in einem senkrechten Winkel zueinander und schneiden sich in einem Mittelpunkt der beiden Achsen 6 und 10.

Parallel verlaufend zu der Längsachse 10 und somit parallel beabstandet zu den Spannschiebern 7, 8 ist ein Betätigungselement 11 vorgesehen, das in einer in dem Gehäuse 4 eingearbeiteten Bohrung 9 drehbar gelagert ist. Die beiden gegenüberliegend zueinander angeordneten freien Enden des Betätigungselementes 11 sind von außen frei zugänglich, so dass das Betätigungselement 11 manuell, beispielsweise mittels eines Schraubendrehers, oder maschinell mithilfe eines Elektromotors angetrieben bzw. gedreht werden kann. Das Betätigungselement 11 weist demnach eine Rotationsachse 12 auf, die zu der Längsachse 10 parallel verläuft und zu dieser beabstandet ist. In das Gehäuse 4 sind im Bereich der freien Enden des Betätigungselementes 11 zwei Antriebsöffnungen 20 vorgesehen.

Um die triebliche Wirkverbindung zwischen dem Betätigungselement 11 und den synchron zu bewegenden Spannschiebern 7, 8 zu erreichen, sind zwei Schwenkzapfen 14, 15 in dem Gehäuse 4 gelagert, die im Wesentlichen senkrecht zu der Längsachse 10 bzw. der Rotationsachse 12 verlaufen. Zur Übertragung der Drehbewegungen des Betätigungselementes 11 sind in der Mantelfläche des Betätigungselementes 11 zwei spiralförmig ausgerichtete Führungsnuten 18 eingearbeitet, in die das jeweilige erste freie Ende 16 der Schwenkzapfen 14 und 15 eingesetzt ist und somit zwischen diesen eine triebliche Wirkverbindung gebildet ist. Beabstandet zu dieser Kraftübertragungs-Position sind die zweiten freien Enden 17 der Schwenkzapfen 14 und 15 in einem dem Gehäuse 4 zugeordneten Widerlager 21 eingesetzt. Demnach sind die Schwenkzapfen 14, 15 zwischen dem Betätigungselement 11 und dem jeweiligen Widerlager 21 eingesetzt und überbrücken den von diesen Bauteilen vorgegebenen Abstand.

Darüber hinaus ist in die Spannschieber 7, 8 jeweils eine Durchgangsöffnung 13 eingearbeitet, durch die die jeweiligen Schwenkzapfen 14, 15 hindurchgeführt sind.

Im Ausführungsbeispiel ist die Durchgangsöffnung 13 vollständig geschlossen. Diese kann jedoch auch als U-förmiger Kanal oder Führungsnut ausgebildet sein.

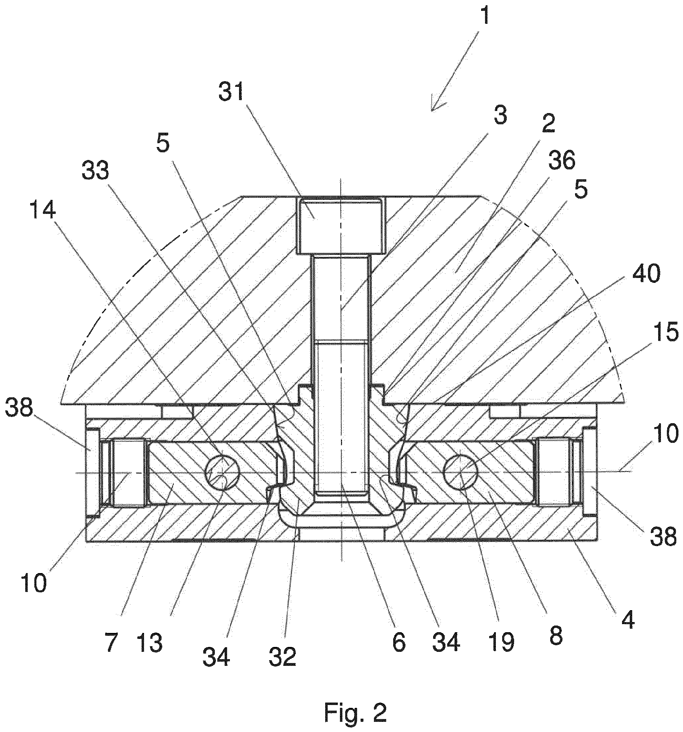

In Figur 2 ist abgebildet, wie der Gegenstand 2 zunächst an der Spannhülse 32 mittels eines Gewindestiftes 31 fixiert ist. Dabei ist in die Spannhülse 32 eine Gewindebohrung 35 eingearbeitet, in die der Gewindestift 31 eingeschraubt ist und dadurch den Gegenstand 2 mit der Spannhülse 32 verbindet. Um die Zentrierung des Gegenstandes 2 an der Spannhülse 32 zu erreichen, weist diese eine ringförmige Zentrierfläche 36 auf, an der der Gegenstand 2 spielfrei anliegt. Somit können eine Vielzahl von identischen oder auch unterschiedlich ausgestalteten Gegenstände 2 an einer baugleichen Spannhülse 32 vormontiert sein, um ein möglichst zügiges Austauschen bzw. Auswechseln von Gegenständen 2 an der Spannvorrichtung 1 zu gewährleisten.

Darüber hinaus ist in der Spannhülse 32 eine umlaufende Zentrieraufnahme 33 angearbeitet, die in ihrem dargestellten unteren Bereich eine geneigte oder schiefe Ebene 34 aufweist, die mit den beiden Spannschiebern 7, 8 während des Spannvorganges zusammenwirkt. Dabei ist die schiefe Ebene 34 aus der Horizontalen in einem bestimmten Winkel geneigt, um im Spannzustand zwischen den Spannschiebern 7, 8 und der Zentrierfläche 34 der Spannhülse 32 eine Selbsthemmung zu erreichen. Gleichzeitig wird durch die horizontale Neigung der schiefen Ebene 34 die radiale Spannkraft der Spannschieber 7, 8 zusätzlich in eine axiale Kraftkomponente umgewandelt, durch die die Spannhülse 32 und somit der Gegenstand 2 in das Innere des Gehäuses 4 gedrückt bzw. gezogen ist. Die Spannschieber 7 und 8 weisen eine gegenläufig zu der Neigung der Zentrierfläche 34 ausgerichtete Spannfläche auf. Zudem ist die Aufnahmeöffnung 5 in ihrem Eingangsbereich im Querschnitt kegelförmig ausgestaltet, wodurch eine weitere Zentrierfläche 40 für die Spannhülse 32 gebildet ist, gegen die diese während des Spannvorganges spielfrei gedrückt ist.

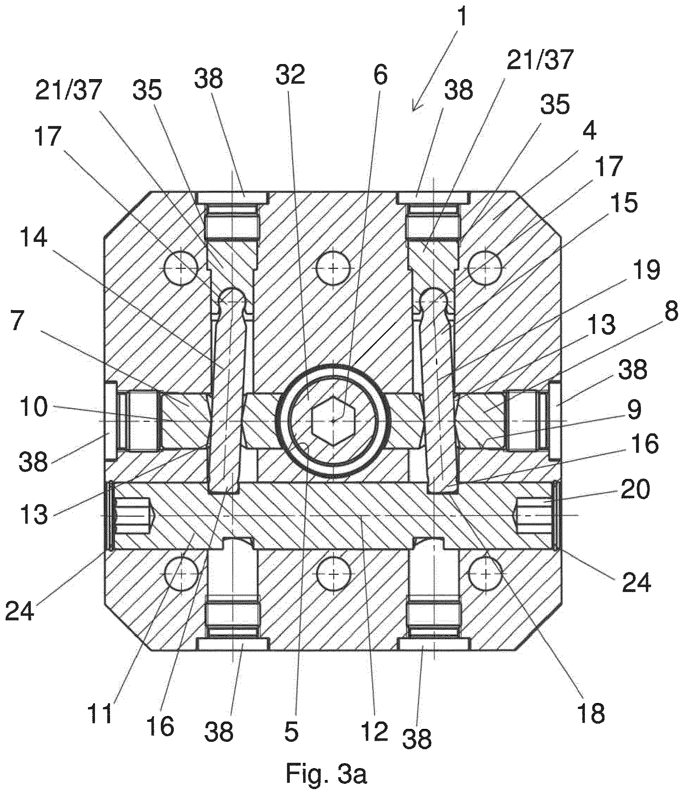

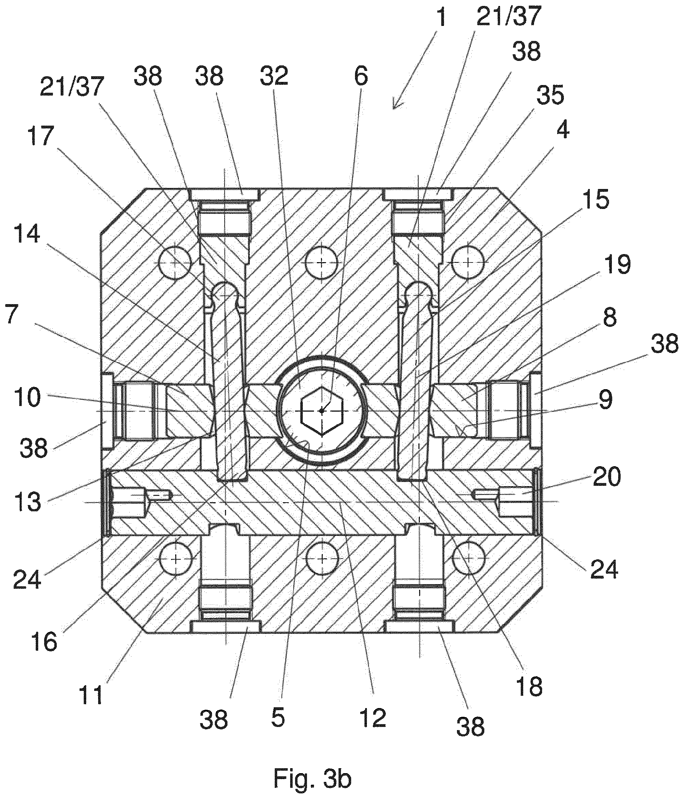

In den Figuren 3a und 3b ist der Bewegungsablauf des Spannvorganges bzw. die Entriegelung abgebildet. Sobald nämlich das Betätigungselement 11 in eine vorgegebene Richtung, beispielsweise im Uhrzeigersinn, gedreht ist, bewegen sich die ersten freien Enden 16 der Schwenkzapfen 14, 15 aufgrund der spiralförmigen Ausgestaltung der Führungsnuten 18 in Richtung der Aufnahmeöffnung 5, also in Richtung des Zentrums des Gehäuses 4. Diese Bewegung entspricht einem Teilkreis. Durch die triebliche Kopplung der Schwenkzapfen 14, 15 mit den Spannschiebern 7, 8, in dem die Schwenkzapfen 14 und 15 durch die in die Spannschieber 7, 8 eingearbeiteten Durchgangsöffnung 13 hindurchgreifen, wird die Kippbewegung der Schwenkzapfen 14, 15 unmittelbar auf die jeweiligen Spannschieber 7 oder 8 übertragen, wodurch diese synchron und radial in Richtung der Aufnahmeöffnung 5 bewegt sind, und zwar solange, bis die Spannschieber 7, 8 in einen entsprechenden Spannkontakt mit der Spannhülse 32 gelangen und diese in das Innere des Gehäuses 4 hineinziehen und somit an der Zentrierfläche 40 der Aufnahmeöffnung 5 spielfrei angepresst ist.

Um die Kippbewegungen oder Schwenkbewegungen der Schwenkzapfen 14, 15 gegenüberliegend zu dem Betätigungselement 11 abzustützen, ist das Widerlager 21 vorgesehen. Das Widerlager 21 besteht aus einem Lagerstift 37, der in eine in dem Gehäuse 4 eingearbeiteten Gewindebohrung 35 eingedreht ist. Das dem jeweiligen Schwenkzapfen 14, 15 zugewandte freie Ende des Lagerstiftes 37 weist dabei eine pfannenförmige Innenkontur auf und das zweite freie Ende 17 der Schwenkzapfen 14, 15 ist als Kugelkopf ausgestaltet. Die jeweiligen geometrischen Abmessungen der freien Enden 17 und der Innenkontur der Lagerstifte 37 sind aneinander angepasst, derart, dass die Schwenkzapfen 14, 15 um die jeweilige Längsachse 19 im Bereich des Betätigungselementes 11 beweglich sind. Somit bildet der Lagerstift 37 und die zweiten freien Enden 17 der Schwenkzapfen 14, 15 einen Drehmittelpunkt, um den die Schwenkbewegung der ersten freien Enden 16 der Schwenkzapfen 14, 15 auf einer Kreisbahn erfolgt.

Das Betätigungselement 11 ist durch zwei Segerringe 24a in dem Gehäuse 4 gesichert, die jeweils im Bereich der Aufnahmeöffnung 20 angeordnet sind und durch die das Betätigungselement in axialer Richtung drehbar gehalten ist.

Sobald die Schwenkzapfen 14,15 und die vier Lagerstifte 37 in dem Gehäuse 4 montiert sind, kann die jeweils vorhandene Öffnung zur Einführung der Lagerstifte 37 mittels einer Verschlussbuchse 38 wasser- bzw. gasdicht verschlossen sein, um den Eintritt von Verschmutzungen in das Innere des Gehäuses 4 zu verhindern.

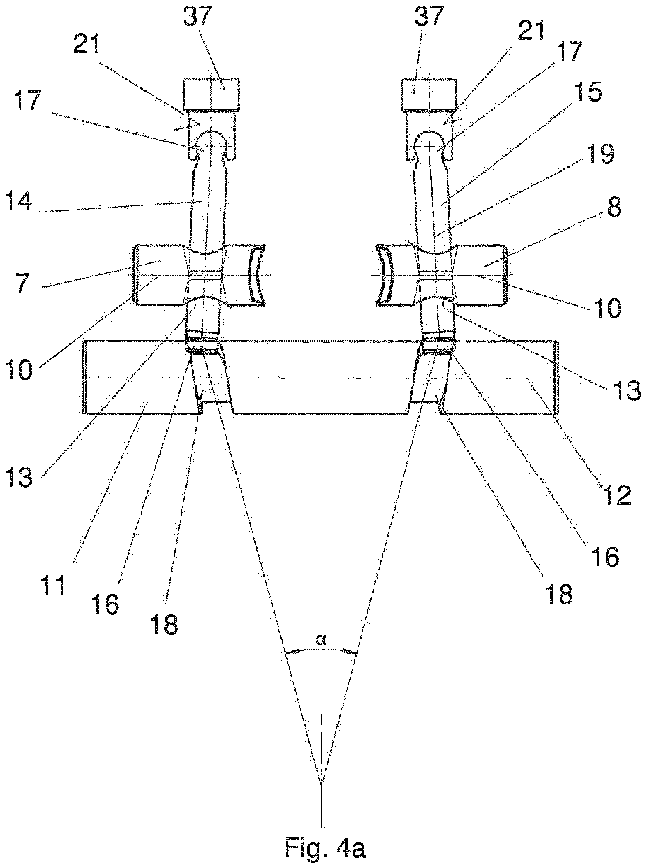

Die geometrischen Ausgestaltungen zur Kraft- bzw. Bewegungsübertragung kann Figur 4a entnommen werden. Die beiden in das Betätigungselement 11 eingearbeiteten Führungsnuten 18 sind dabei in einem Winkel α zueinander geneigt. Der Schnittpunkt der Mittellinien der Führungsnuten 18 ist rein virtuell und liegt außerhalb des Gehäuses 4. Durch diese schematische Anordnung der erfindungswesentlichen Bauteile soll die Umwandlung der Drehbewegung des Betätigungselementes 11 in eine synchrone und radiale Zustellbewegung der Spannschieber 7, 8 durch die Kreisbewegung der Schwenkzapfen 14, 15 und deren Abstützung in dem Widerlager 21 erläutert sein.

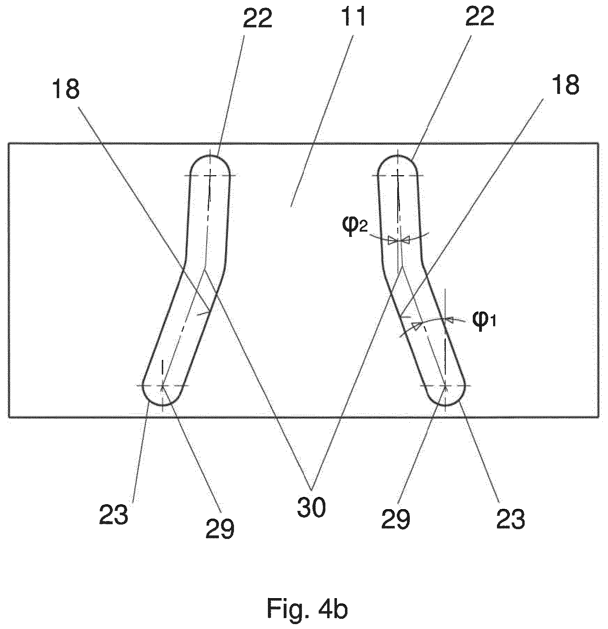

In Figur 4b ist die Ausgestaltung der beiden Führungsnuten 18 in dem Betätigungselement 11 abgebildet. Dabei weisen die Führungsnuten 18 zwei unterschiedliche Neigungen oder Steigungen auf, denn die Zustellbewegung der Spannschieber 7 ,8 soll während deren Zustellung möglichst mit einer hohen Geschwindigkeit erfolgen. Hierzu ist eine geringe Betätigungskraft erforderlich, so dass die Steigung oder Neigung der Führungsnuten gegenüber einer Bezugsachse größer ausfallen kann als die Neigung oder Steigung während des Spannvorganges.

Der erste Neigungswinkel ist dabei mit q₁ und der zweite Neigungswinkel mit q₂ schematisch in Figur 4b eingezeichnet. Der jeweilige Startpunkt ist mit der Bezugsziffer 29 und der Übergangspunkt ist mit der Bezugsziffer 30 gekennzeichnet. Der Übergangspunkt 30 ist dabei dem Auftreffen der Spannschieber 7, 8 auf der Zentrierfläche 34 der Spannhülse 32 zugeordnet. Ausgehend von dem vollständig geöffneten Zustand der Spannschieber 7, 8 werden diese zunächst in den Startpunkt 29 mit dem Neigungswinkel q₁ in Richtung der Spannhülse 32 zugestellt. Dabei ist lediglich eine geringe Betätigungskraft erforderlich. Sobald die Spannschieber 7, 8 in Wirkkontakt mit der Spannhülse 32 gelangen befinden sich die ersten freien Enden 16 der Schwenkzapfen 14, 15 im Bereich des zweiten Neigungswinkel q₂ - Übergangspunkt 30 - wodurch die Zustellgeschwindigkeit reduziert ist und gleichzeitig die übertragene Betätigungskraft erheblich gegenüber dem ersten Neigungswinkel q₁ vergrößert ist.

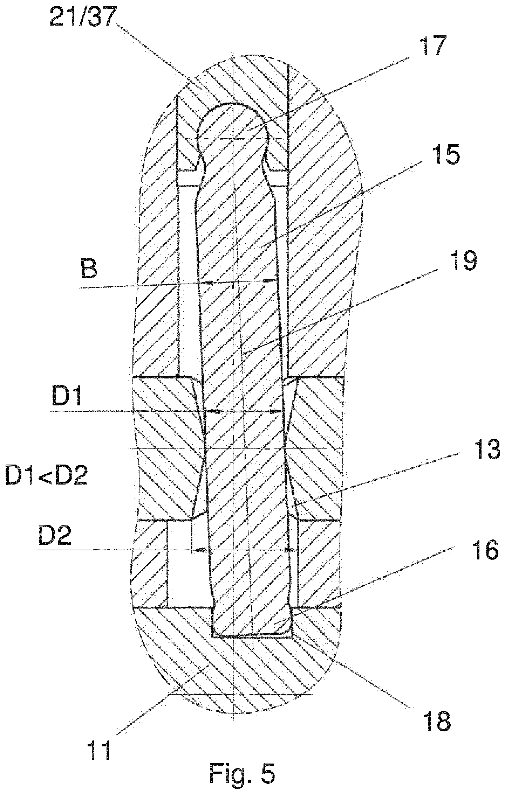

Aus Figur 5 ist die triebliche Verbindung zwischen dem Betätigungselement 11 und einem der Schwenkzapfen 14 oder 15, deren Lagerung in einem der Spannschieber 7,8 und die Abstützung im Widerlager 21 zu entnehmen. Um ein Verkanten oder Verklemmen der Schwenkzapfen 14, 15 in den Spannschiebern und 7, 8 zu verhindern, ist die Durchgangsöffnung 13, durch die die Schwenkzapfen 14, 15 hindurchgeführt sind, aufgeweitet. Der im Bereich der Längsachse 10 vorgesehene Durchmesser D₁ der Durchgangsöffnung 13 ist dabei kleiner bemessen als der Durchmesser D₂, der auf der Außenseite der jeweiligen Spannschieber, 7, 8 vorhanden ist. Die Breite B der Schwenkzapfen 14, 15 entspricht dem Innendurchmesser D₁. Somit liegt der jeweilige Schwenkzapfen 14, 15 unabhängig von dessen Stellung ringförmig an dem Innendurchmesser D₁ der Durchgangsöffnung 13 an und wird durch die von dem Betätigungselement 11 beim Verdrehen erzeugten Betätigungskraft auf die Spannschieber 7, 8 übertragen.

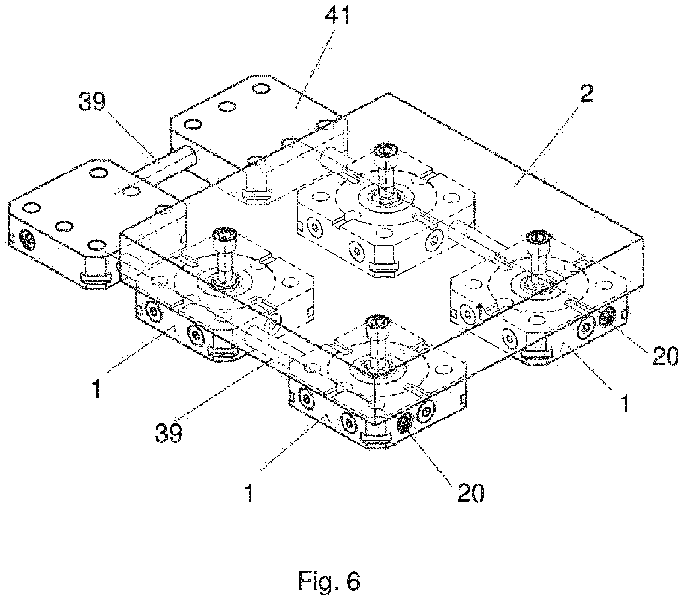

In Figur 6 ist der Zusammenbau von mehreren erfindungsgemäßen Spannvorrichtungen 1 zu entnehmen. Dabei stützen vier Spannvorrichtungen 1 einen Gegenstand 2 ab. Zwei benachbarte Spannvorrichtungen 1 können dabei über eine Welle 39 miteinander gekoppelt sein, und zwar derart, dass die jeweiligen Betätigungselemente 11 über die Welle 39 in einer trieblichen Wirkverbindung stehen. Somit ist es möglich, dass mehrere Spannvorrichtungen 1 beispielsweise über einen Elektromotor 25 gleichzeitig angetrieben sind. Zwei weitere Spannvorrichtungen 1 fixieren keinen Gestand 2; sind jedoch Bestandteil des Antriebstranges. Die Kraftübertragung erfolgt somit entlang einer Ringfläche im Bereich des Durchesser D₁.

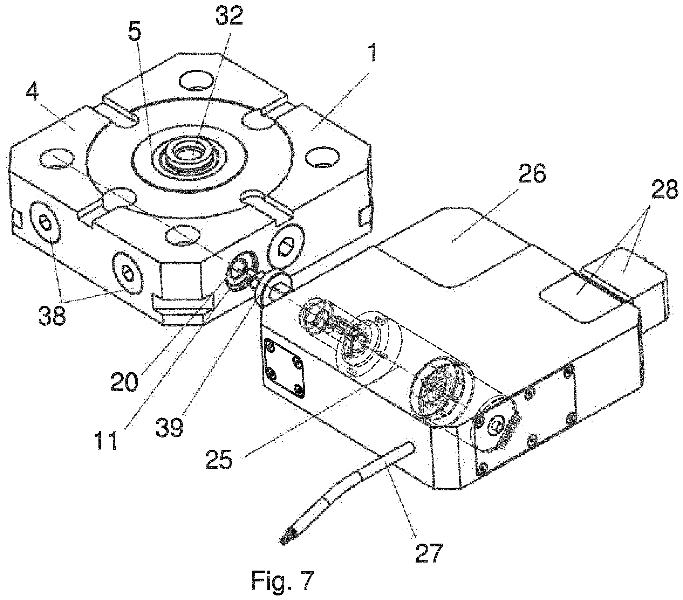

Figur 7 verdeutlicht, wie ein externer Elektromotor 25 an das Betätigungselement 11 anzuschließen ist. Der Elektromotor 25 kann mittels eines Akkumulators 29 oder über elektrische Leitungen 27 mit einer nicht dargestellten Stromquelle verbunden sein, um die notwendige Energie für die Bewegung des Betätigungselements 11 aufbringen zu können.

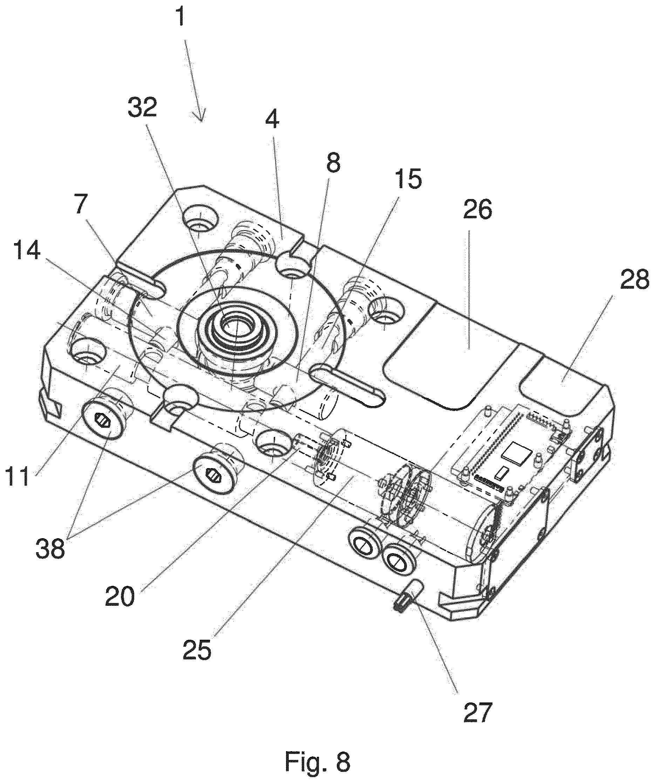

Aus Figur 8 ist ersichtlich, dass der Elektromotor 25 sowie ein Akku oder eine induktive Energie-Übertragungseinrichtung 28 im Inneren des Gehäuses 4 der Spannvorrichtung 1 eingebaut sein können. Die Kombination der Anordnungen gemäß Figur 8 und Figur 6 besteht darin, dass ein gemäß Figur 8 ausgestaltetes Spanngehäuse 4 mehrere Spannvorrichtungen 1 antreiben kann, die keinen Elektromotor 25 benötigen. Folglich kann ein Benutzer mehrere Module von Spannvorrichtungen 1 ohne eigenständigen elektrischen Antrieb zusammenschalten und eines der in diesem Strang von Spannvorrichtungen 1 vorhandenes Modul weist einen Elektromotor 25 auf. Das mit dem Elektromotor 25 ausgestattete Modul der Spannvorrichtung 1 kann dabei an einer beliebigen Position im Antriebsstrang angeordnet sein.

In den vorhandenen Erläuterungen ist auf das Ausführungsbeispiel Bezug genommen, dass die Spannhülse 32 in die Aufnahmeöffnung 5 eingesetzt und während des Spannzustandes zentriert fixiert ist. Die Spannhülse 32 stellt folglich ein Trägerteil für den Gegenstand 2, bspw. das Werkstück 2, Werkzeug oder eine Palette dar. Es versteht sich für jeden handwerklich versierten Fachmann, dass in jeden Gegenstand 2 eine der Spannhülse 32 nachgebildete Haltekontur einzuarbeiten, so dass jeder Gegenstand 2 unmittelbar in die Aufnahmeöffnung 5 einsetzbar und in diesen lageorientiert und zentriert gehalten ist.

## Patentansprüche

1. Nullpunkt-Spannvorrichtung (1) zur zentrischen und wiederholungsgenauen Arretierung eines Gegenstandes (2), insbesondere eines Werkstücks, eines Werkzeugs od. einer Palette, bestehend aus:
- einem Gehäuse (4),
- einer in dem Gehäuse (4) eingearbeiteten Aufnahmeöffnung (5), die eine Zentrierachse (6) aufweist, zu der der Gegenstand (2) während des Spannvorganges ausgerichtet ist,
- und mit zwei gegenüberliegenden Spannschiebern (7, 8), die jeweils in einer in dem Gehäuse (4) vorgesehenen Bohrung (9) axial verschiebbar gelagert sind und die in die Aufnahmeöffnung (5) während des Spannzustandes münden und dadurch auf den Gegenstand (2) oder einem Trägerteil (32) einwirken und diesen zentrieren,
**dadurch gekennzeichnet,**
- **dass** in dem Gehäuse (4) ein Betätigungselement (11) verdrehbar gelagert ist, dessen Rotationsachse (12) parallel zu den Spannschiebern (7, 8) verläuft,
- **dass** in jeden Spannschieber (7, 8) eine Durchgangsöffnung (13) eingearbeitet ist, die senkrecht zu der Längssachse (10) der Spannschieber (7, 8) ausgerichtet ist,
- **dass** in jede Durchgangsöffnung (13) ein Schwenkzapfen (14, 15) eingesetzt ist, dessen eines freies Ende (16) in einer in dem Betätigungselement (11) eingearbeiteten Führungsnut (18) eingreift und mit dieser trieblich verbunden ist und dessen gegenüberliegendes zweites freies Ende (17) in einen dem Gehäuse (4) zugeordneten Widerlager (21) eingesetzt ist und in diesem kippbar gehalten ist.

2. Spannvorrichtung nach Anspruch 1,
**dadurch gekennzeichnet,**
**dass** das Betätigungselement (11) als Zylinder oder Rohr ausgestaltet ist und dass in die Mantelfläche des Betätigungselementes (18) die Führungsnuten (18) für jeden der mit dieser betrieblich gekoppelten Schwenkzapfen (14, 15) eingearbeitet ist, in die die freien Enden (16) der Schwenkzapfen (14, 15) geführt gehalten sind.

3. Spannvorrichtung nach Anspruch 2,
**dadurch gekennzeichnet,**
**dass** die Führungsnuten (18) bezogen auf die Rotationsachse (12) des Betätigungselementes (11) geneigt sind und im Wesentlichen spiralförmig über einen Teil des Umfanges der Mantelfläche des Betätigungselementes (11) verlaufen.

4. Spannvorrichtung nach Anspruch 3,
**dadurch gekennzeichnet,**
**dass** die in die Mantelfläche des Betätigungselementes (11) eingearbeiteten Führungsnuten (18) zwei zueinander beabstandete Anschläge (22, 23) aufweisen, durch die die freien Enden (16) der Schwenkzapfen (14, 15) in ihrer Bewegungsfreiheit gehalten sind und als Anlagefläche für die Schwenkzapfen (14, 15) dienen.

5. Spannvorrichtung nach einem der vorgenannten Ansprüche,
**dadurch gekennzeichnet,**
**dass** die freien Enden (17) der jeweiligen Schwenkzapfen (14,15), die in einem Widerlager (21) des Gehäuses (4) angeordnet sind, als Kugelkopf oder mit einer gebogenen Außenkontur ausgebildet sind und dass das jeweilige Widerlager (21) eine Innenkontur aufweist, die an die Außenkontur der freien Enden (17) der jeweiligen Schwenkzapfen (14, 15) angepasst ist, derart, dass die Schwenkzapfen (14, 15) um die eigene Längsachse (19) beweglich gehalten sind.

6. Spannvorrichtung nach einem der vorgenannten Ansprüche,
**dadurch gekennzeichnet,**
**dass** die in den Spannschiebern (7, 8) eingearbeitete Durchgangsöffnung (9) eine nach außen gebogene Innenkontur aufweist, deren Durchmesser im Außenbereich größer als im Zentrum der Spannschieber (7, 8) ausgebildet ist und dass der Durchmesser im Zentrum der Durchgangsöffnung (9) an den Durchmesser oder die Breite der Schwenkzapfen (7, 8) derart angepasst ist, dass die Schwenkzapfen (7, 8) an der Innenwand der Durchgangsöffnung (9) im Bereich der Längsachse (10) der jeweiligen Spannschieber (7, 8) anliegen und von diesen geführt sind.

7. Spannvorrichtung nach einem der vorgenannten Ansprüche,
**dadurch gekennzeichnet,**
**dass** durch die Rotation des Betätigungselementes (11) eine Kippbewegung auf die jeweiligen Schwenkzapfen (14, 15) ausgeübt ist und dass durch die Kippbewegung der Schwenkzapfen (14, 15) der jeweilige Spannschieber (7, 8) radial in Richtung des Zentrums der Aufnahmeöffnung (5) oder entgegengesetzt dazu bewegbar ist.

8. Spannvorrichtung nach einem der vorgenannten Ansprüche,
**dadurch gekennzeichnet,**
**dass** das Betätigungselement (11) von außen frei zugänglich ist und dass das Betätigungselement (11) manuell und/oder mittels eines Elektromotors (25) angreifbar ist.

9. Spannvorrichtungen nach einem der vorgenannten Ansprüche 1-7,
**dadurch gekennzeichnet,**
**dass** im Inneren des Gehäuses (4) der Spannvorrichtung (1) ein Elektromotor (25) vorgesehen ist, der trieblich mit dem Betätigungselement (11) verbunden ist und dass der Elektromotor (25) über elektrische Leitungen (27) oder über eine induktive Schnittstelle (28) mit Energie versorgt ist oder dass im Gehäuse (4) der Spannvorrichtung (1) ein Akkumulator (26) vorgesehen ist, der mit dem jeweiligen Elektromotor (25) elektrisch verbunden ist und diesen mit Strom versorgt.

10. Spannvorrichtung nach einem der vorgenannten Ansprüche,
**dadurch gekennzeichnet,**
**dass** eine Vielzahl von Spannvorrichtungen (1) trieblich miteinander gekoppelt sind, vorzugsweise, dass jedes Betätigungselement (11) einer der Spannvorrichtungen (1) mit einem benachbarten Betätigungselement (11) kraft- oder form- schlüssig in Wirkverbindung steht.

11. Spannvorrichtung nach einem der vorgenannten Ansprüche,
**dadurch gekennzeichnet,**
**dass** an den freien Enden der Spannschieber (7, 8), die in die Aufnahmeöffnung (5) während des Spannungszustandes eingreifen, eine schiefe Ebene angeformt ist, die aus der Horizontalen oder Vertikalen geneigt ist, und dass in die Aufnahmeöffnung (5) ein Trägerteil in Form einer Spannhülse (32) einsetzbar ist, an dessen Mantelfläche eine zentrierte Aufnahme (33) eingearbeitet ist, die im Spannzustand mit den schiefen Ebenen (34) der Spannschieber (7, 8) zusammenwirkt und dadurch die Spannhülse (32) in radialer und axialer Richtung festsetzt.

12. Spannvorrichtung nach einem der vorgenannten Ansprüche,
**dadurch gekennzeichnet,**
**dass** das Widerlager (21) als Gewindestift ausgestaltet ist, in dessen freien dem jeweiligen Schwenkzapfen (14, 15) zugeordneten Ende eine pfannenartige Ausnehmung aufweist, in die der Kugelkopf des jeweiligen Schwenkzapfens (14, 15) eingesetzt ist und dass der Gewindestift (21) in einer in dem Gehäuse (4) eingearbeiteten Gewindebohrung (35) eingedreht ist.

13. Spannvorrichtung nach einem der vorgenannten Ansprüche,
**dadurch gekennzeichnet,**
**dass** die Spannschieber (7, 8), das Betätigungselement (11) und die Schwenkzapfen (14, 15) in einer gemeinsamen Ebene angeordnet sind.

14. Spannvorrichtung nach einem der vorgenannten Ansprüche,
**dadurch gekennzeichnet,**
**dass** die in dem Betätigungselement (11) vorgesehenen Führungsnuten (18) als Axiallager dienen und dass in die Führungsnuten (18) ein von außen in das Gehäuse (4) eingedrehter Lagerstift (37) eingreift, durch den das Betätigungselement (11) in axialer Richtung gehalten ist.

15. Spannvorrichtung nach Anspruch 14,
**dadurch gekennzeichnet,**
**dass** die Führungsnuten (18) mindestens zwei unterschiedliche Neigungs- oder Steigungswinkel (q₁, q₂) aufweisen, durch die die Zustellgeschwindigkeit und die Betätigungskraft der Spannschieber (7, 8) voreinstellbar bzw. vorgegeben ist.

## Claims

1. A zero-point clamping device (1) for centred locking of an object (2) with repeat accuracy, in particular a workpiece, a tool or a pallet, consisting of:
- a housing (4),
- a receiving opening (5) incorporated into the housing (4), which has a centring axis (6), with which the object (2) is aligned during the clamping process,
- and having two opposite clamping slides (7, 8), each of which is mounted axially displaceably in a bore (9) provided in the housing (4), and which open into the receiving opening (5) during the clamping condition and thereby act on the object (2) or a carrier part (32) and centre it,
**characterised in that**
- an actuating element (11) is rotatably mounted in the housing (4), whose axis of rotation (12) extends in parallel to the clamping slides (7, 8),
- a through-opening (13), which is aligned perpendicularly to the longitudinal axis (10) of the clamping slides (7, 8), is incorporated in each of the clamping slides (7,8),
- a pivot pin (14, 15) is inserted into each through-opening (13), whose one free end (16) of which engages in a guide groove (18) incorporated in the actuating element (11) and is drivingly connected therewith and whose opposing second free end (17) is inserted into an abutment (21) assigned to the housing (4) and is retained therein in a tiltable manner.

2. The clamping device according to claim 1,
**characterised in that**
the actuating element (11) is designed as a cylinder or a tube, and **in that** into the circumferential surface of the actuating element (18) the guide grooves (18) for each of the pivot pins (14, 15) drivingly coupled therewith are incorporated, in which the free ends (16) of the pivot pins (14, 15) are supported and guided.

3. The clamping device according to claim 2,
**characterised in that**
the guide grooves (18) are inclined in relation to the axis of rotation (12) of the actuating element (11) and extend substantially spirally over part of the dimension of the circumferential surface of the actuating element (11).

4. The clamping device according to claim 3,
**characterised in that**
the guide grooves (18) incorporated into the circumferential surface of the actuating element (11) have two stopper elements (22, 23) spaced apart from one another, which delimit the free movement of the free ends (16) of the pivot pins (14, 15) and which serve as a contact surface for the pivot pins (14, 15).

5. The clamping device according to one of the aforementioned claims,
**characterised in that**
the free ends (17) of each of the pivot pins (14, 15) arranged in an abutment (21) of the housing (4) are designed as a ball head or to have a curved outer contour and **in that** each of the abutments (21) has an inner contour which is matched to the outer contour of the free ends (17) of the respective pivot pins (14, 15) in such a way that the pivot pins (14, 15) are supported to be movable around their own longitudinal axis (19).

6. The clamping device according one of the aforementioned claims,
**characterised in that**
the through-opening (9) incorporated into the clamping slides (7, 8) has an outwardly curved inner contour, the diameter of which is larger in the outer region than in the centre of the clamping slide (7, 8) and **in that** the diameter in the centre of the through-opening (9) is adapted to the diameter or the width of the pivot pins (7, 8) in such a way that the pivot pins (7, 8) rest against the inner wall of the through-opening (9) in the region of the longitudinal axis (10) of the respective clamping slides (7, 8) and are guided thereby.

7. The clamping device according to one of the aforementioned claims,
**characterised in that**
a tilting movement is exerted on the respective pivot pins (14, 15) by the rotation of the actuating element (11), and **in that** due to the tilting movement of the pivot pins (14, 15) the respective clamping slide (7, 8) is movable radially towards the centre of the receiving opening (5) or in the opposite direction thereto.

8. The clamping device according to one of the aforementioned claims,
**characterised in that**
the actuating element (11) is freely accessible from the outside and **in that** the actuating element (11) can be acted upon manually and/or by means of an electric motor (25).

9. The clamping device according to any of the aforementioned claims 1 to 7,
**characterised in that**
an electric motor (25) is provided inside the housing (4) of the clamping device (1) that is drivingly coupled with the actuating element (11) and **in that** the electric motor (25) is supplied with power via electric cables (27) or via an inductive interface (28), or **in that** a battery (26) is provided in the housing (4) of the clamping device (1), which battery (26) is electrically connected to the respective electric motor (25) for supplying it with power.

10. The clamping device according to one of the aforementioned claims,
**characterised in that**
a plurality of clamping devices (1) are drivingly coupled with one another, preferably **in that** each actuating element (11) of one of the clamping devices (1) is operatively connected to an adjacent actuating element (11) in a non-positive or a positive manner.

11. The clamping device according to one of the aforementioned claims,
**characterised in that**
at the free ends of the clamping slides (7, 8) engaging in the receiving opening (5) during the clamped condition, an oblique plane is formed, which is inclined in relation to the horizontal or vertical, and **in that** a carrier part in the form of a clamping sleeve (32) can be inserted into the receiving opening (5) at the circumferential surface whereof a centred reception (33) is incorporated, which interacts with the oblique planes (34) of the clamping slides (7, 8) in a clamped condition to thereby secure the clamping sleeve (32) in a radial and axial direction.

12. The clamping device according to one of the aforementioned claims,
**characterised in that**
the abutment (21) is designed as a threaded pin, the free end of which, associated with the respective pivot pin (14, 15), has a cup-like recess, into which the ball head of the respective pivot pin (14, 15) is inserted, and **in that** the threaded pin (21) is screwed into a threaded bore (35) incorporated into the housing (4).

13. The clamping device according to one of the aforementioned claims,
**characterised in that**
the clamping slides (7, 8), the actuating element (11) and the pivot pins (14, 15) are arranged on a common plane.

14. The clamping device according to one of the aforementioned claims,
**characterised in that**
the guide grooves (18) provided in the actuating element (11) serve as axial bearings, and **in that** a bearing pin (37), which is screwed into the housing (4) from outside and by means of which the actuating element (11) is held in the axial direction, engages in the guide grooves (18).

15. The clamping device according to claim 14,
**characterised in that**
the guide grooves (18) have at least two different angles of inclination or pitch (q₁, q₂), by means of which the speed feed and the actuation force of the clamping slides (7, 8) can be preset or is predefined.

## Revendications

1. Dispositif de serrage à point zéro (1) servant au positionnement centré et avec reproductibilité d'un objet (2), en particulier d'une pièce à usiner, d'un outil ou d'une palette, comprenant :
- un boîtier (4),
- une ouverture de réception (5) pratiquée dans le boîtier (4), qui possède un axe de centrage (6) sur lequel est aligné l'objet (2) durant le serrage,
- et avec deux glissières de serrage (7, 8) logées respectivement de manière axialement mobile dans un alésage (9) pratiqué dans le boîtier (4) et qui, lors du serrage, aboutissent dans l'ouverture de réception (5) afin d'agir sur l'objet (2) ou l'élément de support (32) et de les centrer,
**caractérisé en ce que**
- dans le boîtier (4) il est logé en rotation un élément d'actionnement (11) dont l'axe de rotation (12) est parallèle aux glissières de serrage (7, 8),
- dans chaque glissière de serrage (7, 8), il est pratiqué une ouverture de passage (13) perpendiculaire à l'axe longitudinal (10) des glissières de serrage (7, 8)
- dans chaque ouverture de passage (13), il est inséré un téton pivotant (14, 15) dont une extrémité libre (16) s'engrène dans une rainure de guidage (18) prévue dans l'élément d'actionnement (11) et qui est raccordée en liaison d'entraînement à celle-ci, et dont la deuxième extrémité opposée libre (17) est insérée dans une butée (21) assignée au boîtier (4) et retenue de manière basculant dans celui-ci.

2. Dispositif de serrage d'après la revendication 1,
**caractérisé en ce que**
l'élément d'actionnement (11) est conçu sous la forme d'un cylindre ou d'un tuyau et que dans le manteau de l'élément d'actionnement (11), il est pratiqué les rainures de guidage (18) pour chacun des tétons pivotants (14, 15) en liaison d'entraînement avec celui-ci et où sont retenues les extrémités libres (16) des tétons pivotants (14, 15).

3. Dispositif de serrage d'après la revendication 2,
**caractérisé en ce que**
les rainures de guidage (18) sont inclinées par rapport à l'axe de rotation (12) de l'élément d'actionnement (11) et s'étendent essentiellement sous la forme de spires sur une partie du pourtour du manteau de l'élément d'actionnement (11).

4. Dispositif de serrage d'après la revendication 3,
**caractérisé en ce que**
les rainures de guidage (18) pratiquées dans le manteau de l'élément d'actionnement (11) comportent deux butées (22, 23) espacées l'une de l'autre, qui définissent la liberté de mouvement des extrémités libres (16) des tétons pivotants (14, 15) et qui servent de face de butée pour les tétons pivotants (14, 15).

5. Dispositif de serrage d'après une des revendications précédentes,
**caractérisé en ce que**
les extrémités libres (17) des tétons pivotants respectifs (14, 15) qui sont disposées dans une butée (21) du boîtier (4) sont conçues sous la forme d'une tête sphérique ou possèdent un contour extérieur courbé, et que la butée respective (21) possède un contour intérieur adapté au contour extérieur des extrémités libres (17) des tétons pivotants respectifs (14, 15), de sorte que les tétons pivotants (14, 15) soient retenus de manière mobile autour de leur axe longitudinal (19).

6. Dispositif de serrage d'après une des revendications précédentes,
**caractérisé en ce que**
l'ouverture de passage (9) pratiquée dans les glissières de serrage (7, 8) possède un contour intérieur courbé vers l'extérieur dont le diamètre vers l'extérieur est plus grand qu'au centre des glissières de serrage (7, 8) et que le diamètre au centre de l'ouverture de passage (9) est adapté au diamètre ou à la largeur des tétons pivotants (14, 15) de sorte qu'au niveau de l'axe longitudinal (10) des glissières de serrage respectives (7, 8), les tétons pivotants (14, 15) portent sur la paroi intérieure de l'ouverture de passage (9) et sont guidés par celles-ci.

7. Dispositif de serrage d'après une des revendications précédentes,
**caractérisé en ce que**
la rotation de l'élément d'actionnement (11) provoque le basculement des tétons pivotants respectifs (14, 15) et que le basculement des tétons pivotants (14, 15) a pour effet que la glissière de serrage respective (7, 8) se déplace radialement en direction du centre de l'ouverture de réception (5) ou en direction opposée.

8. Dispositif de serrage d'après une des revendications précédentes,
**caractérisé en ce que**
l'élément d'actionnement (11) est librement accessible de l'extérieur et que l'élément d'actionnement (11) se laisse actionner manuellement et/ou à l'aide d'un moteur électrique (25).

9. Dispositif de serrage d'après une des revendications précédentes 1 à 7,
**caractérisé en ce que**
à l'intérieur du boîtier (4) du dispositif de serrage (1), il est prévu un moteur électrique (25) qui est en liaison d'entraînement avec l'élément d'actionnement (11) et que le moteur électrique (25) est alimenté en énergie par l'intermédiaire de lignes électriques (27) ou par un interface inductif (28), ou que dans le boîtier (4) du dispositif de serrage (1), il est prévu un accumulateur (26) qui est en liaison électrique avec le moteur électrique respectif (25) et l'alimente en énergie.

10. Dispositif de serrage d'après une des revendications précédentes,
**caractérisé en ce que**
plusieurs dispositifs de serrage (1) sont raccordés en liaison d'entraînement de sorte que, de préférence, chaque élément d'actionnement (11) d'un des dispositifs de serrage (1) est en liaison d'entraînement par la forme et la force avec un élément d'actionnement voisin (11).

11. Dispositif de serrage d'après une des revendications précédentes,
**caractérisé en ce que**
sur les extrémités libres des glissières de serrage (7, 8) qui, lors du serrage, s'engrènent dans l'ouverture de réception (5), il est prévu un plan incliné par rapport à l'horizontale ou la verticale, et que dans l'ouverture de réception (5), il peut être monté un élément de support sous la forme d'une douille de serrage (32) dont le manteau comporte une réception centrée (33) qui, au serrage, collabore avec les plans obliques (34) des glissières de serrage (7, 8) pour positionner la douille de serrage (32) en directions radiale ou axiale.

12. Dispositif de serrage d'après une des revendications précédentes,
**caractérisé en ce que**
la butée (21) est réalisée en tant que goujon fileté dont l'extrémité libre assignée au téton pivotant respectif (14, 15) possède un évidement sous la forme d'une poche dans lequel il est inséré la tête sphérique du téton pivotant respectif (14, 15), et que le goujon fileté (21) st vissé dans un taraudage (35) pratiqué dans le boîtier (4).

13. Dispositif de serrage d'après une des revendications précédentes,
**caractérisé en ce que**
les glissières de serrage (7, 8), l'élément d'actionnement (11) et les tétons pivotants (14, 15) sont disposés dans un plan commun.

14. Dispositif de serrage d'après une des revendications précédentes,
**caractérisé en ce que**
les rainures de guidage (18) prévues dans l'élément d'actionnement (11) servent de palier axial et qui retient et que dans les rainures de guidage (18), il s'engrène un goujon (37) vissé de l'extérieur dans le boîtier (4) et retenant l'élément d'actionnement (11) en direction axiale.

15. Dispositif de serrage d'après la revendication 14,
**caractérisé en ce que**
les rainures de guidage (18) possèdent au moins deux angles d'inclinaison (q₁, q₂) qui permettent de régler ou de définir à l'avance la vitesse d'avance et la force d'actionnement des glissières de serrage (7, 8).
